Europäisches Patentamt

European Patent Office

Office européen des brevets

(19)

(11) **EP 1 624 640 A1**

(12) # EUROPEAN PATENT APPLICATION

(43) Date of publication:
**08.02.2006 Bulletin 2006/06**

(51) Int Cl.:
*H04L 29/06* (2006.01)

(21) Application number: **05016911.9**

(22) Date of filing: **03.08.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **03.08.2004 KR 2004061108**

(71) Applicant: **LG Electronics Inc.
Yongdungpo-gu
Seoul (KR)**

(72) Inventor: **Kim, Young Han
Dongan-gu
Anyang-si
Gyeonggi-do (KR)**

(74) Representative: **von Hellfeld, Axel
Wuesthoff & Wuesthoff
Patent- und Rechtsanwälte
Schweigerstrasse 2
81541 München (DE)**

(54) **Dynamic control method for session timeout**

(57)     A dynamic control method of timeout in forward message transmission is disclosed, by which a continuous network transmission delay can be adaptively handled. The present invention includes a first step of initializing values of variables to be used, a second step of transmitting a message requesting a streaming service to a server after a session is set up, a third step of confirming an arrival of a response message from the server, a fourth step of updating a timeout value in case that the response message arrives and feeding back to the second step, and a fifth step of controlling the session by comparing a duration to the timeout value in case that the response message does not arrive.

**EP 1 624 640 A1**

## Description

This application claims the benefit of the Korean Patent Application No. P10-2004-0061108, filed on August 03, 2004, which is hereby incorporated by reference as if fully set forth herein.

## BACKGROUND OF THE INVENTION

### Field of the Invention

The present invention relates to a dynamic control method for timeout in forward message transmission, and more particularly, to a method of controlling a session timeout value in RTSP protocol operation.

### Discussion of the Related Art

Generally, it is inconvenient to wait for tens of minutes until a moving picture file (mov, avi, etc.) is completely downloaded. A streaming service, which is different from a conventional service, is a service enabling real-time reproduction with a predetermined volume of data. Namely, by segmenting multimedia data into small units to transfer to a client, the streaming service can reproduce the multimedia data without long-time download.

The streaming service is classified into an on-demand service and a real-time casting service. In video-on-demand/audio-on-demand service, the widely used standard is a combination of RTSP/TCP or RTCP/RTP/UDP protocols. The RTPS (real-time streaming protocol) is in charge of generation/maintenance/termination of a streaming session and performs an RTSP message transfer based on the TCP.

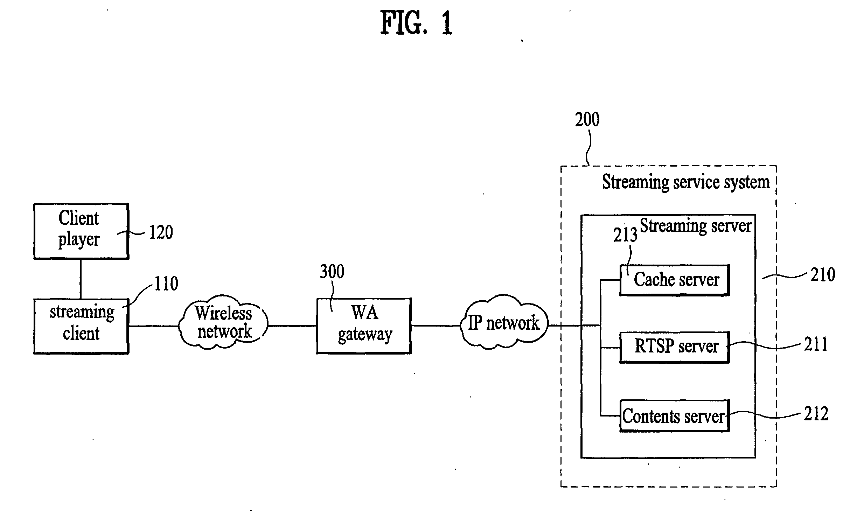

A structure for implementing a streaming service is shown in FIG. 1.

Referring to FIG. 1, a structure for implementing a streaming service according to a related art consists of a streaming client 110 requesting a multimedia streaming service, a WAP gateway 300 receiving a corresponding multimedia streaming service request via a wireless network, a multimedia streaming service system 200 providing the multimedia streaming service by receiving the corresponding multimedia streaming service request via an IP network, and a client player 120 receiving multimedia streaming data from the multimedia streaming service system 200 to reproduce.

The multimedia streaming service system 200 consists of an RTSP (real-time streaming protocol) server 211 controlling the multimedia streaming service, a contents server 212 storing the multimedia streaming data for streaming contents, and a streaming server 210 having a cache server 213 for an on-demand service or an advertisement service.

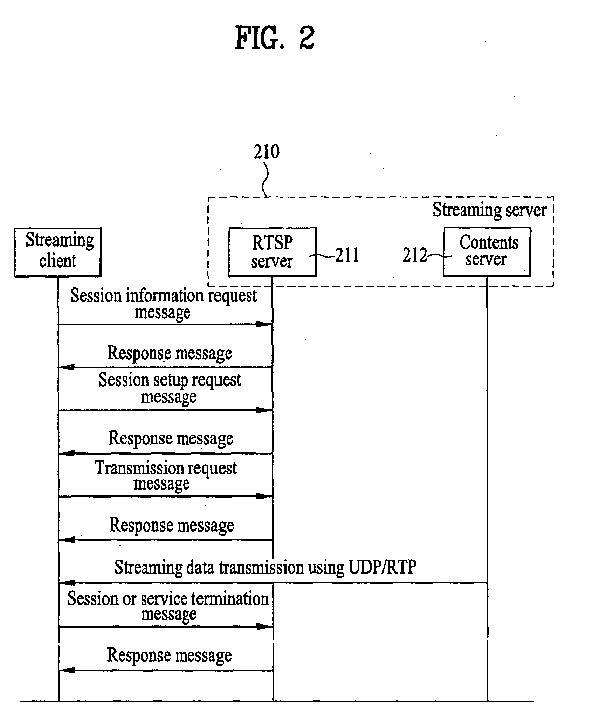

A multimedia streaming service flow is explained with reference to FIG. 2 as follows.

First of all, the streaming client 110 transfers a session information request message to the RTSP server 211 of the streaming server 210. The RTSP server 211 transfers a response message to the corresponding session information request message to the streaming client 110. Hence, the streaming client 110 acquires information for the corresponding session.

The streaming client 110 transfers a session setup request message to the RTSP server 211 based on the information for the corresponding session. The RTSP server 211 transfers a response message to the corresponding session setup request message to the streaming client 110. Hence, the streaming client 110 sets up a session for the RTSP server 211.

The streaming client 110 transfers a streaming data transfer request message to the RTSP server 211. The RTSP server 211 transfers a response message to the corresponding streaming data transfer request message to the streaming client 110.

And, according to a control of the RTSP server 211, the contents server 212 transfers the corresponding streaming data to the streaming client 110 using the UDP/RTP protocols. Hence, contents of the streaming data are delivered to a user via the streaming client 110.

After the corresponding multimedia streaming service ends, the streaming client 110 transfers a session or service termination message (RTSP: TEARDOWN) to the RTSP server 211. The RTSP server 211 transfers a response message to the corresponding session or service termination message to the streaming client 110.

There exists a timeout value between the message transmissions. If there is no response from the server or client after expiration of the duration, the server or client failing in receiving the response basically terminates the corresponding session. It takes 8~20 seconds to open the session again, and it may take longer time according to a network status. In doing so, if the session is terminated and is then re-opened, time is considerably wasted.

Moreover, in case that dynamic application for the timeout value is needed according to the network status, it may not be properly handled. The measurement for a presence or non-presence of the timeout, which is a different matter that the TCP protocol guarantees connection reliability in transmission measurement, is managed by a pure application program layer.

## SUMMARY OF THE INVENTION

Accordingly, the present invention is directed to a timeout control method that substantially obviates one or more problems due to limitations and disadvantages of the related art.

An object of the present invention is to provide a timeout control method, by which a continuous network transmission delay can be adaptively handled.

Another object of the present invention is to provide a timeout control method, by which a transmission delay due to TCP retransmission can be properly handled.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a dynamic control method of a session timeout according to the present invention is characterized in calculating a time out value for a reception of a response message each time based on previous values in a process of a streaming service using an RTSP (real-time streaming protocol) based on a TCP (transmission control protocol), wherein the response message is received from a server in response to a message of a client.

In another aspect of the present invention, a dynamic control method of a session timeout includes a first step of initializing values of variables to be used, a second step of transmitting a message requesting a streaming service to a server after a session is set up, a third step of confirming an arrival of a response message from the server, a fourth step of updating a timeout value in case that the response message arrives and feeding back to the second step, and a fifth step of controlling the session by comparing a duration to the timeout value in case that the response message does not arrive.

Preferably, the fifth step includes the steps of comparing a currently set timeout value to the duration, feeding back to the third step by incrementing the duration if the duration does not exceed the currently set timeout value, and updating the timeout value to tear down the session if the duration exceeds the currently set timeout value.

More preferably, the timeout value is updated in a manner that the timeout value is set to a value resulting from dividing a total of a duration mean and a duration current by 2.

More preferably, the timeout value does not deviate from a range between preset minimum and maximum values.

It is to be understood that both the foregoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a structure for implementing a streaming service;

FIG. 2 is a flowchart of a multimedia streaming service process; and

FIG. 3 is a flowchart of a timeout control method according to the present invention.

## DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

First of all, a timeout control method according to the present invention is explained with reference to the attached drawing as follows.

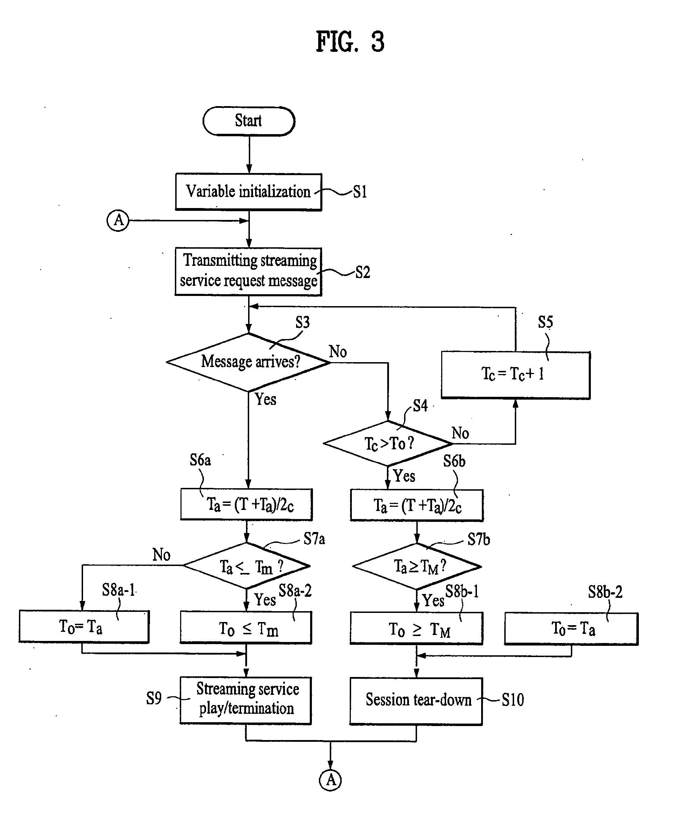

In the present invention, after an RTSP session is set up between a client and a server, in case that messages are transmitted/received between the client and the server, session termination is prevented by amendment/compensation of a timeout measurement used by the client until a response message to a message sent from the client is received from the server. A detailed process of the present invention is explained with reference to a flowchart shown in FIG. 3.

FIG. 3 is a flowchart of a timeout control method according to the present invention.

Referring to FIG. 3, once power is applied to a terminal, variable values to be used later are initialized. And, the variables to be used include a duration current $T_c$, a duration mean $T_a$, a timeout $T_o$, a minimum value $T_m$, a maximum value $T_M$ and the like (S1).

Once a session is set up, a client sends a transmission request message for requesting a streaming service to a server. From this time, the client calculates a time taken for a response message to the transmission request message, which was sent from the client to the server, to arrive from the server (S2).

Subsequently, it is checked whether the response message is received from the server (S3). If the response message is received, a value resulting from adding a duration current $T_c$ to a duration mean $T_a$ IS divided by 2 $\left( T_a = \dfrac{T_a \dotplus T_b}{2} \right)$ to change the former duration mean $T_a$ into a new duration mean $T_a$ (S6a).

The changed duration mean $T_a$ is compared to a preset minimum value $T_m$ (S7a).

If the changed duration mean $T_a$ is smaller than the minimum value $T_m$, the minimum value $T_m$ is changed into a timeout value $T_o$ (S8a-1).

If the changed duration mean $T_a$ is not smaller than the minimum value $T_m$, a new timeout value $T_o$ is

set to the changed duration mean $T_a$ (S8a-2).

Meanwhile, it the response message is not received yet, the duration current $T_c$ and the set timeout value To are compared to each other (S4).

If the duration current $T_c$ is smaller than the set timeout value To, the duration current $T_c$ is incremented by '1' ($T_c=T_c+1$) and it goes back to a response message standby mode (S5).

If the duration current $T_c$ is greater than the set timeout value To, the duration mean Ta is changed into

$$\left(T_a = \frac{T_a + T_b}{2}\right)$$ resulting from dividing a value resulting from adding a duration current $T_c$ to a duration mean $T_a$ by '2' (S6b).

Thereafter, the changed duration mean $T_a$ is compared to a preset maximum value $T_M$ (S7b).

If the changed duration mean $T_a$ exceeds the maximum value $T_M$, the maximum value $T_M$ is changed into a new timeout value To (S8b-1).

If the changed duration mean $T_a$ does not exceed the maximum value $T_M$, a new timeout value $T_o$ is set to the changed duration mean $T_a$ (S8b-2).

Thereafter, a current session is terminated and it goes back to a procedure for another processing.

In the present invention, in case that the situation corresponds to a timeout, the duration mean is updated and the session is then terminated.

And, the timeout value used in standby is newly calculated each time based on the former values. Hence, if the response message arrives, the duration mean is updated and it goes to a next procedure of the streaming service.

Accordingly, the timeout value control method according to the present invention provides the following effect or advantage.

First of all, by continuously recording the duration taken for receiving the message response from the client each time and by applying the corresponding calculated mean value to the new timeout value, the present invention enables the dynamic control according to a network status.

Therefore, the present invention can prevent the termination (teardown) of the session in case of the poor network status.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

**Claims**

**1.** A dynamic control method of a session timeout, **characterized in** calculating a time out value for a reception of a response message each time based on previous values in a process of a streaming service using an RTSP (real-time streaming protocol) based on a TCP (transmission control protocol), wherein the response message is received from a server in response to a message of a client.

**2.** A dynamic control method of a session timeout, comprising:

a first step of initializing values of variables to be used;
a second step of transmitting a message requesting a streaming service to a server after a session is set up;
a third step of confirming an arrival of a response message from the server;
a fourth step of updating a timeout value in case that the response message arrives and feeding back to the second step; and
a fifth step of controlling the session by comparing a duration current to the timeout value in case that the response message does not arrive.

**3.** The dynamic control method of claim 2, the fourth step of updating the timeout value, comprising the steps of:

changing a duration mean;
comparing the changed duration mean to a set minimum value; and
setting the timeout value according to a result of the comparing step.

**4.** The dynamic control method of claim 3, wherein the duration mean changing step is carried out in a manner that the duration mean is set to a value resulting from dividing a total value of a previous duration mean and a duration current by 2.

**5.** The dynamic control method of claim 4, the timeout value setting step comprising the steps of:

setting the timeout value to the minimum value if the changed duration mean is smaller than the set minimum value; and
setting a new timeout value to the changed duration mean if the changed duration mean is equal to or greater than the set minimum value.

**6.** The dynamic control method of claim 2, the session control step comprising the steps of:

if a currently set timeout value does not expire according to a result of comparing the currently set timeout value to the duration current, increasing a duration to go back to the third step;

**EP 1 624 640 A1**

if the currently set timeout value expires according to the result of comparing the currently set timeout value to the duration current, changing the duration mean;

comparing the changed duration mean to a set maximum value; and

setting the timeout value according to a result of comparing the changed duration mean to the set maximum value.

7. The dynamic control method of claim 6, wherein the duration mean changing step is carried out in a manner that the duration mean is set to a value resulting from dividing a total value of a previous duration mean and a duration current by 2.

8. The dynamic control method of claim 7, the timeout value setting step comprising the steps of:

setting the timeout value to the maximum value if the changed duration mean is equal to or smaller than the set maximum value; and

setting a new timeout value to the changed duration mean if the changed duration mean is greater than the set maximum value.

9. The dynamic control method of claim 2, wherein the timeout value does not deviate from a range between preset minimum and maximum values.

# FIG. 1

EP 1 624 640 A1

# FIG. 2

# FIG. 3

Start

Variable initialization — S1

Ⓐ

Transmitting streaming service request message — S2

S3
Message arrives? — No

S5
$T_c = T_c + 1$

Yes

S4
$T_c > T_o$? — No

Yes

S6a
$T_a = (T + T_a)/2_c$

S6b
$T_a = (T + T_a)/2_c$

S7a
No — $T_a \leq T_m$?

S7b
$T_a \geq T_M$?

S8a-1
$T_o = T_a$

Yes S8a-2
$T_o \leq T_m$

Yes S8b-1
$T_o \geq T_M$

S8b-2
$T_o = T_a$

S9 — Streaming service play/termination

Session tear-down — S10

Ⓐ

# EP 1 624 640 A1

**European Patent Office**

## EUROPEAN SEARCH REPORT

**Application Number**

EP 05 01 6911

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 077 559 A (TELEFONAKTIEBOLAGET LM ERICSSON) 21 February 2001 (2001-02-21) <br> * abstract * <br> * page 2, paragraph 5 - paragraph 7 * <br> * page 9, paragraph 63 - paragraph 70 * <br> * claim 1 * <br> ----- | 1-9 | H04L29/06 |

**TECHNICAL FIELDS SEARCHED (Int.Cl.7)**

H04L

The present search report has been drawn up for all claims

| Place of search | Date of completion of the search | Examiner |
|---|---|---|
| The Hague | 28 October 2005 | Karavassilis, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

**ANNEX TO THE EUROPEAN SEARCH REPORT
ON EUROPEAN PATENT APPLICATION NO.**                    EP 05 01 6911

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2005

| Patent document cited in search report | | Publication date | Patent family member(s) | | Publication date |
|---|---|---|---|---|---|
| EP 1077559 | A | 21-02-2001 | AT | 280461 T | 15-11-2004 |
| | | | AT | 296511 T | 15-06-2005 |
| | | | AT | 298955 T | 15-07-2005 |
| | | | AU | 766823 B2 | 23-10-2003 |
| | | | AU | 7271900 A | 13-03-2001 |
| | | | CA | 2381374 A1 | 22-02-2001 |
| | | | CN | 1370361 A | 18-09-2002 |
| | | | DE | 60015142 D1 | 25-11-2004 |
| | | | DE | 60020413 D1 | 30-06-2005 |
| | | | DE | 60021126 D1 | 04-08-2005 |
| | | | WO | 0113587 A2 | 22-02-2001 |
| | | | ES | 2228604 T3 | 16-04-2005 |
| | | | ES | 2239292 T3 | 16-09-2005 |
| | | | JP | 2003507934 T | 25-02-2003 |
| | | | MX | PA02001534 A | 02-07-2002 |
| | | | NO | 20020753 A | 09-04-2002 |
| | | | TW | 522690 B | 01-03-2003 |
| | | | US | 6901081 B1 | 31-05-2005 |

EPO FORM P0459

For more details about this annex : see Official Journal of the European Patent Office, No. 12/82